# EUROPÄISCHE PATENTANMELDUNG

(11) **EP 4 391 278 A1**
(43) Veröffentlichungstag der Anmeldung: **26.06.2024**
(21) Anmeldenummer: 22215592.1
(22) Anmeldetag: 21.12.2022
(51) Int. Cl.: H02J 7/00, H02M 1/00, H02M 7/483, H01M 10/44, H01M 10/617, B60L 58/22, H01M 10/42

(54) **VERFAHREN ZUR ERZEUGUNG EINER WECHSELSPANNUNG, SCHALTUNGSANORDNUNG UND ENERGIEVERSORGUNGSSYSTEM**

(71) Anmelder: SAX Power GmbH, 89155 Erbach (DE)
(72) Erfinder: Xie, Anya, 89079 Ulm (DE)
(74) Vertreter: Lorenz, Matthias

(57) **Zusammenfassung**

Die Erfindung betrifft ein Verfahren zur Erzeugung einer Wechselspannung (u₁) durch Verschaltung einer Mehrzahl von Gleichspannungsquellen (4), aufweisend zumindest die folgenden Verfahrensschritte:
- Erfassen von Ladungsdifferenzen der Gleichspannungsquellen (4);
- Berücksichtigen der erfassten Ladungsdifferenzen im Rahmen der Verschaltung der Gleichspannungsquellen (4) zur Durchführung eines Ladungsausgleichs;
- Erfassen von Temperaturdifferenzen (ΔT) zwischen den Gleichspannungsquellen (4);
und
- Berücksichtigen der erfassten Temperaturdifferenzen (ΔT) im Rahmen der Verschaltung der Gleichspannungsquellen (4) zur Durchführung eines Temperaturausgleichs.

## Beschreibung

Die Erfindung betrifft ein Verfahren zur Erzeugung einer Wechselspannung durch Verschaltung einer Mehrzahl von Gleichspannungsquellen, gemäß dem Oberbegriff des Anspruchs 1. Die Erfindung betrifft außerdem ein Computerprogramm zur Durchführung des Verfahrens.

Die Erfindung betrifft auch eine Schaltungsanordnung zur Erzeugung einer Wechselspannung aus einer Mehrzahl von Gleichspannungsquellen, aufweisend wenigstens eine Wechselrichtereinheit zur Erzeugung und Bereitstellung der Wechselspannung und eine Ladungsausgleichseinheit zur Erfassung und zum Ausgleich von Ladungsdifferenzen zwischen den Gleichspannungsquellen, gemäß dem Oberbegriff des Anspruchs 11.

Die Erfindung betrifft weiter ein Energieversorgungssystem, aufweisend eine Schaltungsanordnung zur Erzeugung einer Wechselspannung und mehrere Gleichspannungsquellen.

In Energieversorgungssystemen kommen mitunter Batteriespeichersysteme zum Einsatz, wie beispielsweise Photovoltaik-Heimspeicher ("Solarbatterien") zur Speicherung von Ertragsüberschüssen von Photovoltaikanlagen oder Antriebsbatterien ("Hochvoltspeicher") zur Versorgung der Elektromotoren bzw. Antriebsaggregate von Elektrofahrzeugen. Solche Batteriespeichersysteme benötigen mitunter Batteriespannungen von mehreren hundert Volt. Da die Zellspannung einer einzelnen Batteriezelle jedoch lediglich einige Volt beträgt (z. B. 3,7 V bei einer Lithium-lonen-Batterie), müssen viele einzelne Batteriezellen zu einem Batteriepack bzw. Akkupack (nachfolgend auch vereinfacht als "Batterie" bezeichnet) in Reihe geschaltet werden.

Fabrikationsbedingt weist jede Batteriezelle einer Batterie Unterschiede in ihren Eigenschaften auf, wie zum Beispiel der Zellkapazität, der Selbstentladungsrate und der Temperaturcharakteristik. Im Laufe der Zeit werden diese Differenzen durch Alterungseffekte zusätzlich verstärkt. Dies hat zur Folge, dass beim Ladevorgang einige Batteriezellen ihren maximalen Ladungsstand noch nicht erreicht haben, während andere Batteriezellen bereits vollständig aufgeladen sind. Das Überladen der bereits vollständig geladenen Batteriezellen kann schließlich zu deren Schädigung bis hin zu deren Zerstörung führen. Um dies zu verhindern, muss der Ladevorgang vorzeitlich abgebrochen werden.

Beim Entladevorgang verhält es sich ähnlich. Während einige Batteriezellen bereits vollkommen entladen sind, speichern andere Batteriezellen mitunter noch ausreichend Energie, um beispielsweise ein Elektrofahrzeug weiter anzutreiben. Beim Beispiel des Elektrofahrzeugs müsste schließlich der Fahrbetrieb vorzeitig abgebrochen werden, da ansonsten die schwächeren Batteriezellen tiefentladen werden, was - wie bei der Überladung - zu deren Zerstörung führen kann.

Um einen reibungslosen Lade- und Entladevorgang zu gewährleisten, werden Batteriemanagementsysteme ("BMS") für den Ladungsausgleich zwischen den einzelnen Batteriezellen eingesetzt, vgl. J. Qi, D. Lu., "Review of Battery Cell Balancing Techniques", Australasian Universities Power Engineering Conference, AUPEC 2014, Curtin University, Perth, Australia, 28 Sept. 1 Oct. 2014.

Das zum Anmeldezeitpunkt verbreitetste Verfahren ist der so genannte passive Ladungsausgleich. Dabei werden bereits vollständig aufgeladene Batteriezellen über einen Widerstand wieder entladen, während die anderen Batteriezellen weiter aufgeladen werden. Ein offensichtlicher Nachteil dieses Verfahrens ist, dass hierbei wertvolle elektrische Energie verloren geht und dass das Verfahren zudem keine Lösung für den Entladevorgang bietet.

Die Probleme des passiven Ladungsausgleichs können mithilfe eines aktiven Ladungsausgleichs behoben werden. Bei dieser Technik sind jedoch aufwendige Schaltungen mit leistungselektronischen Bauteilen und komplizierter Steuerung erforderlich. Für induktive Ausgleichschaltungen können beispielsweise zwei Metall-Oxid-Halbleiter-Feldeffekttransistoren ("Metal-Oxide-Semiconductor Field-Effect Transistor, MOSFET) pro Batteriezelle erforderlich sein; für kapazitive Ausgleichschaltungen in der Regel sogar vier. Weiter sind Drosseln, Transformatoren oder Kondensatoren als Energiespeicher notwendig.

Zur Erzeugung von Drehspannungen, z. B. für die elektrischen Maschinen bzw. Elektromotoren in einem Elektrofahrzeug, werden häufig selbstgeführte Wechselrichter eingesetzt. In der Regel besteht ein solcher Wechselrichter aus sechs leistungselektronischen Ventilen, die zu einer Drehstrombrücke zusammengeschaltet sind. Bei diesem "Zweipunkt-Wechselrichter" werden die sinusförmigen Wechselspannungen aus pulsförmigen Spannungen mit drei Spannungsleveln (0, ±U_{DC}) erzeugt. Die Höhe der Spannungspulse ist von der Batteriespannung U_{DC} abhängig und damit konstant. Um Wechselspannungen zu generieren, kann als Stellglied die Zeitdauer der Spannungspulse variiert werden. Sie wird in der Regel mit dem Verfahren der Pulsweitenmodulation (PWM) berechnet. In diesem Fall finden sich in den Wechselspannungen jedoch hohe Störspannungen in den überlagerten Frequenzen. Um die Spannungsoberschwingungen zu reduzieren ist es bekannt, die Taktfrequenzen des Wechselrichters zu erhöhen. In der Regel liegen die Taktfrequenzen eines modernen Umrichters daher im Bereich mehrerer kHz bis zu 100 kHz. Allerdings steigen die Schaltverluste der Wechselrichter proportional zu deren Taktfrequenz.

Um diese Probleme zu umgehen, kann ein modularer Wechselrichter eingesetzt werden, wie beispielsweise in der DE 10 2011 004 248 A1 vorgeschlagen. Bei dieser Technik werden die einzelnen Batteriezellen nicht direkt, sondern über leistungselektronische H-Brückenschaltungen in Reihe geschaltet. Auf diese Weise kann die Anzahl der Spannungsstufen erhöht und es können bei einer vorgegebenen Spannungsqualität die Taktfrequenzen und somit die Schaltverluste des Wechselrichters reduziert werden. Die Höhe der kleinsten Spannungsstufe ist dabei gleich der Zellspannung der eingesetzten Batterie (z. B. 3,7 V).

Das Prinzip kann sich für einphasige Verbraucher, und sogar für dreiphasige Verbraucher eignen. Ein dreiphasiger modularer Wechselrichter kann beispielsweise aus zwei in Reihe geschalteten einphasigen modularen Wechselrichtern gebildet werden, wie dies in der gattungsgemäßen DE 10 2018 003 642 A1 vorgeschlagen wird.

Da die einzelnen Batteriezellen jeweils über eine separate H-Brücke geschaltet werden können, ist ein Ladungsausgleich der Batteriezellen möglich. Beim Ausfall einzelner Batteriezellen kann der Wechselrichter mit den "gesunden" Zellen sicher weiterbetrieben werden. Defekte Batteriezellen können ausgeschaltet und überbrückt werden und sind daher sicher auswechselbar. Die Verfügbarkeit ist dadurch deutlich höher als bei einer direkten Reihenschaltung der Batteriezellen.

Die beschriebene Schaltung stellt im Grunde eine Kombination eines Multi-Level-Wechselrichters, eines aktiven Ladungsausgleichs und eines verteilten Batteriemanagements dar. Vorteilhaft für die Sicherheit ist außerdem, dass nur eine Batteriezelle bei einer Störung in der Schaltung kurzgeschlossen werden kann. Der Fehlerstrom und die dabei freigesetzte Energie sind deutlich geringer als bei einer konventionellen Reihenschaltung. Außerdem liegt nach dem Ausschalten des Wechselrichters nur die Spannung einer einzelnen Batteriezelle vor. Dies erleichtert die Wartungsarbeit erheblich. Es können Batteriezellen unterschiedlichen Alters und unterschiedlichen Typs im selben Batterieblock eingesetzt werden. Dies erhöht die Nutzungsdauer des Batterieblocks.

Neben den vorgenannten Aspekten, ist die Temperatur einer der größten Einflussfaktoren hinsichtlich Leistungsfähigkeit, Haltbarkeit und Sicherheit von Batterien (insbesondere Lithium-lonen-Batterien). Daher sollte die Temperatur aller Batteriezellen innerhalb eines bestimmten Toleranzbereichs gehalten werden. Temperaturprobleme in einem Batteriepack lassen sich in zwei Gruppen unterteilen: eine Temperaturerhöhung insgesamt durch Verlustenergie während Lade- und Entladevorgängen und eine ungleichmäßige Temperaturverteilung im Batteriepack.

Eine generelle bzw. globale Temperaturerhöhung der Batterie kann durch wirksame Kühlung und Leistungsmanagement in der Regel ausreichend limitiert werden.

Dennoch lässt sich eine ungleichmäßige Temperaturverteilung, sprich Temperaturdifferenzen zwischen den einzelnen Batteriezellen, bei den bekannten Techniken nicht vermeiden. Die Temperaturdifferenzen innerhalb der Batterie führen zu einer Reduzierung der Lebensdauer und Leistungsfähigkeit einzelner Batteriezellen. Da in einem Batteriesystem die Lebensdauer, nutzbare Kapazität und Leistung in der Regel von der schwächsten Batteriezelle bestimmt wird, reduziert sich die Leistungsfähigkeit, Haltbarkeit und Sicherheit des gesamten Batteriepacks durch die ungleichmäßige Temperaturverteilung deutlich. Daher ist es erstrebenswert, innerhalb der Batterie für eine gleichmäßige Temperaturverteilung zu sorgen.

Derzeit werden hierfür mitunter äußerst aufwendige Kühlsysteme eingesetzt. In der Regel kommt dabei eine Flüssigkühlung mit steuerbaren Kühlkanälen zum Einsatz.

In Anbetracht des bekannten Stands der Technik besteht die Aufgabe der vorliegenden Erfindung darin, ein Verfahren zur Erzeugung einer Wechselspannung durch Verschaltung einer Mehrzahl von Gleichspannungsquellen bereitzustellen, das eine besonders hohe Leistungsfähigkeit, Verfügbarkeit und Sicherheit gewährleistet.

Der vorliegenden Erfindung liegt auch die Aufgabe zugrunde, ein vorteilhaftes Computerprogramm zur Durchführung eines solchen Verfahrens bereitzustellen.

Außerdem ist es Aufgabe der Erfindung, eine Schaltungsanordnung zur Erzeugung einer Wechselspannung aus einer Mehrzahl von Gleichspannungsquellen bereitzustellen, die eine besonders hohe Leistungsfähigkeit, Verfügbarkeit und Sicherheit gewährleistet.

Es ist auch eine Aufgabe der Erfindung, ein Energieversorgungssystem auf Grundlage mehrerer Gleichspannungsquellen bereitzustellen, das eine besonders hohe Leistungsfähigkeit, Verfügbarkeit und Sicherheit gewährleistet.

Die Aufgabe wird für das Verfahren mit den in Anspruch 1 aufgeführten Merkmalen gelöst. Hinsichtlich des Computerprogramms wird die Aufgabe durch die Merkmale des Anspruchs 10 gelöst. Betreffend die Schaltungsanordnung wird die Aufgabe durch Anspruch 11 und für das Energieversorgungssystem durch Anspruch 14 gelöst.

Die abhängigen Ansprüche und die nachfolgend beschriebenen Merkmale betreffen vorteilhafte Ausführungsformen und Varianten der Erfindung.

Es ist ein Verfahren zur Erzeugung einer Wechselspannung durch Verschaltung einer Mehrzahl von Gleichspannungsquellen vorgesehen.

Bei der zu erzeugenden Wechselspannung kann es sich vorzugsweise um eine einphasige Wechselspannung handeln. Es kann aber auch die Erzeugung einer mehrphasigen Wechselspannung vorgesehen sein, insbesondere einer dreiphasigen Wechselspannung bzw. Drehstrom. Im Grunde können im Rahmen der vorliegenden Erfindung auch mehrere voneinander unabhängige Wechselspannungen und/oder neben wenigstens einer Wechselspannung gegebenenfalls auch eine oder mehrere Gleichspannungen aus den Gleichspannungsquellen erzeugt werden. Die wenigstens eine Wechselspannung kann in Amplitude, Phase und/oder Frequenz einstellbar oder aber auch konstant sein.

Bei der Gleichspannungsquelle kann es sich insbesondere um eine einzelne Batteriezelle einer Batterie oder um eine Gruppe ("Batteriemodul") aus mehreren miteinander verschalteten Batteriezellen einer Batterie handeln. Bei der Gleichspannungsquelle kann es sich gegebenenfalls aber auch um eine komplette Batterie oder um einen Verbund aus mehreren Batterien handeln.

Unter einer "Batterie" ist vorliegend sowohl ein wieder aufladbarer Speicher zu verstehen (also ein "Akkumulator" / "Akkupack"), dessen einzelne Zellen auch "Sekundärzellen" genannt werden, als auch ein nicht wieder aufladbarer Speicher. Eine Batterie bzw. ein Batteriepack kann gegebenenfalls auch nur eine einzige Batteriezelle aufweisen. Die vorliegende Erfindung ist daher nicht unbedingt auf Batterien mit mehreren zusammengeschalteten Batteriezellen beschränkt zu verstehen. Mit einer Batterie kann im Rahmen der vorliegenden Beschreibung außerdem auch ein Speicher für elektrische Energie gemeint sein, der nicht oder nicht ausschließlich elektrochemisch aufgebaut ist, also zum Beispiel ein Kondensator.

Grundsätzlich kann es sich bei der Gleichspannungsquelle allerdings um eine beliebige Gleichspannungsquelle handeln, also beispielsweise auch um eine von einer elektronischen Baugruppe bereitgestellte Gleichspannung, beispielsweise um eine ausgangsseitig von einem Gleichrichter und/oder Gleichstromsteller bereitgestellte Gleichspannung. Die Gleichspannungsquellen werden nachfolgend und vorstehend zur Vereinfachung im Wesentlichen als Batteriezellen einer gemeinsamen Batterie bezeichnet, was jedoch nicht einschränkend, sondern nur beispielhaft zu verstehend ist.

Erfindungsgemäß sind im Rahmen des Verfahrens die folgenden Verfahrensschritte vorgesehen:
- Erfassen von Ladungsdifferenzen der Gleichspannungsquellen; und
- Berücksichtigen der erfassten Ladungsdifferenzen im Rahmen der Verschaltung der Gleichspannungsquellen zur Durchführung eines Ladungsausgleichs.

Im Rahmen der Erfindung ist vorzugsweise ein Ladungsausgleich durch die Beeinflussung der Beanspruchungsdauer der jeweiligen Gleichspannungsquellen im Rahmen der Erzeugung der Wechselspannung vorgesehen. Gleichspannungsquellen mit höherer Restladung werden somit länger beansprucht als Gleichspannungsquellen mit niedrigerer Restladung. Die Zeitdauer der Stromführung der Gleichspannungsquellen dient daher vorzugsweise als Steuerungsparameter für den Ladungsausgleich. Dieses Verfahren kann beispielsweise als "Rotating Balacing" bezeichnet werden. Grundsätzlich kann im Rahmen der Erfindung allerdings unter anderem auch ein passiver Ladungsausgleich oder ein aktiver Ladungsausgleich vorgesehen sein.

Zur Erfassung der Ladungsdifferenzen können entsprechende Sensoreinheiten dienen, die beispielsweise Spannungen und/oder Ströme der einzelnen Gleichspannungsquellen oder einer Gruppe von Gleichspannungsquellen erfassen.

Vorzugsweise wird die Verschaltung der Gleichspannungsquellen zur Erzeugung der Wechselspannung im Hinblick auf den Ladungsausgleich festgelegt oder modifiziert.

Erfindungsgemäß sind im Rahmen des Verfahrens außerdem die folgenden Verfahrensschritte vorgesehen:
- Erfassen von Temperaturdifferenzen zwischen den Gleichspannungsquellen; und
- Berücksichtigen der erfassten Temperaturdifferenzen im Rahmen der Verschaltung der Gleichspannungsquellen zur Durchführung eines Temperaturausgleichs.

Vorzugsweise wird die Verschaltung der Gleichspannungsquellen zur Erzeugung der Wechselspannung im Hinblick auf den Temperaturausgleich festgelegt oder modifiziert.

Zur Erfassung der Temperaturdifferenzen zwischen den Gleichspannungsquellen können die nachfolgend noch näher beschriebenen Temperatursensoren dienen. Bereits an dieser Stelle sei erwähnt, dass es im Rahmen der Erfindung nicht unbedingt erforderlich ist, jeder Gleichspannungsquelle einen eigenen Temperatursensor zuzuordnen.

Dadurch, dass erfindungsgemäß Temperaturdifferenzen zwischen den Gleichspannungsquellen ausgeglichen werden, kann die Leistungsfähigkeit, Haltbarkeit bzw. Verfügbarkeit und Sicherheit des Gesamtsystems deutlich erhöht werden.

Ergänzend zu der Angleichung der Temperaturen der Gleichspannungsquellen kann optional auch eine zusätzliche Kühlung oder eine sonstige Maßnahme vorgesehen sein, um die Temperatur aller Gleichspannungsquellen insgesamt zu reduzieren. Hierzu können beispielsweise Kühlkanäle an den Gleichspannungsquellen vorbeigeführt werden. Entsprechende Maßnahmen zur Reduzierung der Temperatur einer Batterie sind bekannt, weshalb hierauf nicht näher eingegangen wird.

In einer vorteilhaften Weiterbildung der Erfindung kann vorgesehen sein, dass die Gleichspannungsquellen in einer konfigurierbaren Reihenschaltung miteinander verschaltet werden, um die Wechselspannung vorzugsweise durch eine treppenförmige Annäherung zu erzeugen.

Die Wechselspannung kann durch kleinstufige, treppenförmig aufsummierte Einzelspannungen der einzelnen Gleichspannungsquellen erzeugt werden. Die Höhe der kleinsten Spannungsstufe kann der Ausgangsspannung der jeweiligen Gleichspannungsquelle (z. B. der Zellspannung einer Batteriezelle, wie 3,7 V) entsprechen. Auf diese Weise können die ansonsten in der Regel erforderlichen, hohen Taktfrequenzen einer pulsweitenmodulierten Ausgangsspannung und die damit einhergehenden Schaltverluste stark reduziert werden.

Das erfindungsgemäße Verfahren eignet sich besonders vorteilhaft im Rahmen einer konfigurierbaren Reihenschaltung, da die Reihenschaltung im Hinblick auf den Ladungsausgleich und den Temperaturausgleich komfortabel und flexibel anpassbar ist.

Dies schließt aber beispielsweise nicht aus, dass im Rahmen der Erfindung optional auch Gleichspannungsquellen in einer festen Verdrahtung miteinander verschaltet sind, beispielsweise in einer Reihen- und/oder Parallelschaltung. Beispielsweise können Batteriemodule aus zwei, drei, vier, fünf, sechs, sieben, acht, neun, zehn oder noch mehr fest miteinander verschalteten Batteriezellen gebildet werden, die dann wiederum mit weiteren Batteriemodulen oder Batteriezellen konfigurierbar verschaltet werden. Eine feste Verdrahtung von Gleichspannungsquellen bzw. Batteriezellen kann beispielsweise mittels Stromschienen oder sonstigen geeigneten elektrischen Leitern erfolgen.

Gemäß einer Weiterbildung der Erfindung kann vorgesehen sein, dass im Rahmen des Ladungsausgleichs die Ladungsentnahme aus einer ladungsverminderten Gleichspannungsquelle reduziert und von zumindest einer weiteren der Gleichspannungsquellen zumindest teilweise ausgeglichen wird.

Eine Gleichspannungsquelle kann insbesondere dann als "ladungsverminderte Gleichspannungsquelle" klassifiziert werden, wenn
a) eine Spannungsdifferenz von mehr als 5 mV zu der durchschnittlichen Gleichspannung aller Gleichspannungsquellen, der größten Gleichspannung aller Gleichspannungsquellen, der kleinsten Gleichspannung aller Gleichspannungsquellen oder zumindest einer Gleichspannung einer weiteren der Gleichspannungsquellen erfasst wird, insbesondere wenn die Spannungsdifferenz bzw. der Betrag der Spannungsdifferenz mehr als 10 mV, mehr als 20 mV, mehr als 50 mV, mehr als 100 mV oder mehr als 500 mV beträgt; oder
b) eine Ladezustandsdifferenz von mehr als 1% zu dem durchschnittlichen Ladezustand aller Gleichspannungsquellen, dem größten Ladezustand aller Gleichspannungsquellen, dem kleinsten Ladezustand aller Gleichspannungsquellen oder zumindest einem Ladezustand einer weiteren der Gleichspannungsquellen erfasst wird, insbesondere wenn die Ladezustandsdifferenz mehr als 2% oder mehr als 3% beträgt.

Die Ladezustandsdifferenz bzw. der Ladezustand kann beispielsweise anhand eines geeigneten Modells der Batterie berechnet werden, z. B. auf Grundlage der Batteriezellspannung(en).

Es kann ein Ladungsdifferenzschwellenwert vorgegeben werden, bei dessen Überschreitung der Ladungsausgleich einer oder mehrerer Gleichspannungsquellen durchgeführt wird. Ein besonders geeigneter Schwellenwert kann beispielsweise 10 mV oder 1% betragen.

Gemäß einer Weiterbildung der Erfindung kann vorgesehen sein, dass im Rahmen des Ladungsausgleichs einzig Wirkleistungsanteile der Gleichspannungsquellen untereinander berücksichtigt und ausgeglichen werden.

Da der Blindleistungsanteil in der Regel nicht zu einer praxisrelevanten Ladungsentnahme oder Ladungszuführung aus den und in die Gleichspannungsquellen beiträgt, kann der vorgeschlagene Ladungsausgleich besonders effizient durchgeführt werden, wenn der Blindleistungsanteil beim Ladungsausgleich ignoriert und der Ladungsausgleich ausschließlich auf den Wirkleistungsanteil angewendet wird. Grundsätzlich ist es allerdings auch möglich, im Rahmen des Ladungsausgleichs Wirkleistungs- und Blindleistungsanteile auszugleichen.

In einer Weiterbildung der Erfindung kann vorgesehen sein, dass zur Erfassung der Temperaturdifferenzen zwischen den Gleichspannungsquellen sensortechnisch erfasste Temperaturwerte und/oder approximierte und/oder anhand eines geeigneten thermischen Modells berechnete Temperaturwerte herangezogen werden.

Vorzugsweise ist eine Kombination aus sensortechnisch erfassten Temperaturwerten und approximierten oder berechneten Temperaturwerten vorgesehen, um die Temperaturdifferenzen zu ermitteln.

Die Approximation bzw. Berechnung von Temperaturwerten von Gleichspannungsquellen ist insbesondere vorteilhaft, wenn mehrere Gleichspannungsquellen nah aneinander liegen, beispielsweise in einem gemeinsamen Gleichspannungsmodul bzw. Batteriemodul in enger Packungsdichte nebeneinander angeordnet sind. Auf diese Weise kann die Anzahl erforderlicher Temperatursensoren reduziert werden. Beispielsweise können die Temperaturwerte von Gleichspannungsquellen, die zwischen oder neben mittels Temperatursensoren unmittelbar überwachten Gleichspannungsquellen angeordnet sind, approximiert werden, indem ein Mittelwert zwischen den Temperaturen der benachbarten Gleichspannungsquellen angenommen wird.

In einer Weiterbildung der Erfindung kann vorgesehen sein, dass im Rahmen des Temperaturausgleichs aktuell erfasste Temperaturdifferenzen und/oder anhand eines thermischen Modells prädizierte, zukünftig zu erwartende Temperaturdifferenzen berücksichtigt werden.

Mitunter können die thermischen Zeitkonstanten von Gleichspannungsquellen bei einer Temperatursteuerung problematisch sein, denn diese liegen in der Regel im Bereich von einigen zehn Minuten bis zu mehreren Stunden und sind wegen der unterschiedlichen thermischen Leitwerte der einzelnen Gleichspannungsquellen (z. B. Batteriezellen oder Batteriemodule) auch unterschiedlich groß. Daher kann eine vorausschauende Steuerung der Temperatur bzw. ein vorausschauender Temperaturausgleich vorteilhaft sein.

Die Zeitkonstanten für die einzelnen Gleichspannungsquellen oder Gruppen von Gleichspannungsquellen können mit thermischen Modellen berechnet oder während des Betriebs durch Messungen der Temperatur- und Leistungsverläufe der einzelnen Gleichspannungsquellen bzw. Gruppen bestimmt werden.

Vorzugsweise wird eine Kombination aus aktuell erfassten Temperaturdifferenzen und zukünftig zu erwartenden Temperaturdifferenzen berücksichtigt.

In einer vorteilhaften Weiterbildung der Erfindung kann vorgesehen sein, dass im Rahmen des Temperaturausgleichs die Ladungsentnahme aus einer überwärmten Gleichspannungsquelle reduziert und von zumindest einer weiteren der Gleichspannungsquellen zumindest teilweise ausgeglichen wird.

Eine Gleichspannungsquelle kann insbesondere dann als "überwärmte Gleichspannungsquelle" klassifiziert werden, wenn die Temperaturdifferenz zwischen deren Temperatur und der durchschnittlichen Temperatur aller Gleichspannungsquellen, der höchsten Temperatur aller Gleichspannungsquellen, der niedrigsten Temperatur aller Gleichspannungsquellen oder zumindest einer Temperatur einer der Gleichspannungsquellen einen definierten Temperaturschwellenwert überschreitet.

In einer Weiterbildung der Erfindung kann insbesondere vorgesehen sein, dass als Temperaturschwellenwert 1 °C, 2 °C, 5 °C, 10 °C, 15 °C oder 20 °C verwendet wird.

Insbesondere Temperaturdifferenzen von 10 °C bis 15 °C zwischen mehreren Batteriezellen einer Batterie sind in der Praxis nicht unüblich und im Betrieb durchaus problematisch. Ein besonders geeigneter Grenzwert bzw. Temperaturschwellenwert kann beispielsweise 5 °C sein.

In einer vorteilhaften Weiterbildung der Erfindung kann vorgesehen sein, dass im Rahmen des Temperaturausgleichs einzig Blindleistungsanteile der Gleichspannungsquellen untereinander berücksichtigt und ausgeglichen werden.

Wie bereits erwähnt, tragen die Blindleistungsanteile der Gleichspannungsquellen in der Regel nicht zu einer praxisrelevanten Ladungsentnahme oder Ladungszuführung aus den oder in die Gleichspannungsquellen bei. Aufgrund von Verlusten, insbesondere ohmschen Verlusten, verursachen die Blindleistungsanteile aber dennoch eine nicht unwesentliche Erwärmung der Gleichspannungsquellen. Daher kann der Temperaturausgleich besonders effektiv erfolgen, wenn sich dieser konkret auf die Blindleistungsanteile bezieht.

Da im Rahmen der Erfindung ein Ladungsausgleich einerseits und ein Temperaturausgleich andererseits vorgesehen ist, kann eine Koordinierung beider Ausgleichsverfahren vorteilhaft sein. Insbesondere kann eine Prioritätssetzung zwischen Ladungs- und Temperaturausgleich vorgesehen sein, um Widerspruchssituationen möglichst zu vermeiden. Diese Prioritäten können durch Festlegung der Grenzwerte bzw. Schwellenwerte für die Ladungs- und Temperaturunterschiede der einzelnen Gleichspannungsquellen und durch Überprüfung auf Grenzwertverletzung realisiert werden.

Da die Ladung innerhalb einer Gleichspannungsquelle, beispielsweise Batteriezelle, im Wesentlichen durch die entnommene oder zugeführte Wirkleistung und nur wenig durch die Scheinleistung beeinflusst wird, wohingegen die Scheinleistung durchaus einen nennenswerten Einfluss auf die Temperatur der Gleichspannungsquelle hat, kann insbesondere eine Aufteilung der beiden Ausgleichsverfahren auf Wirkleistung einerseits (Ladungsausgleich) und Scheinleistung andererseits (Temperaturausgleich) jedem der beiden Ausgleichsverfahren ausreichend Spielraum bieten. Konfliktsituationen zwischen den Aufgabenstellungen können dadurch vermieden werden.

An dieser Stelle sei betont, dass die vorstehend und nachfolgend genannten Verfahrensschritte nicht unbedingt in der Reihenfolge durchgeführt werden müssen, in der sie in der Beschreibung oder in den Ansprüchen erstmals beschrieben oder erwähnt sind. Es können daher beispielsweise einzelne Verfahrensschritte oder Gruppen von Verfahrensschritten untereinander austauschbar sein, wenn dies technisch nicht ausgeschlossen ist. Auch können Verfahrensschritte miteinander kombiniert, in separate Zwischenschritte aufgeteilt oder mit Zwischenschritten ergänzt werden. Das Verfahren ist mit den aufgeführten Verfahrensschritten auch nicht unbedingt abschließend beschrieben und kann mit weiteren, auch nicht genannten Verfahrensschritten, ergänzt werden.

Die Erfindung betrifft auch ein Computerprogramm, umfassend Steuerbefehle, die bei der Ausführung des Programms durch eine Steuereinrichtung diese veranlassen, das Verfahren gemäß den vorstehenden und nachfolgenden Ausführungen auszuführen.

Die Steuereinrichtung kann als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer. Die Steuereinrichtung kann sich auch als Kombination mehrerer dezentral innerhalb der nachfolgend noch genannten Schaltungsanordnung verteilt angeordneter elektronischer Bauteile ergeben.

Die Steuereinrichtung kann auch ein Funktionsmodul einer übergeordneten Steuereinheit sein, beispielsweise ein Funktionsmodul eines Batteriemanagementsystems der Gleichspannungsquellen oder eine Steuereinheit des nachfolgend noch genannten Energieversorgungssystems (z. B. eines Fahrzeugs).

Die Erfindung betrifft auch eine Schaltungsanordnung zur Erzeugung einer Wechselspannung aus einer Mehrzahl von Gleichspannungsquellen. Die Schaltungsanordnung weist eine ausgangsseitige Schnittstelle zur Bereitstellung der erzeugten Wechselspannung und wenigstens eine Wechselrichtereinheit zur Erzeugung und Bereitstellung der Wechselspannung an der ausgangsseitigen Schnittstelle aus jeweiligen Gleichspannungen von mit der wenigstens eine Wechselrichtereinheit verbindbaren Gleichspannungsquellen auf.

Die wenigstens eine Gleichspannungsquelle ist vorzugsweise nicht als Komponente der Schaltungsanordnung zu verstehen.

Die Verbindung zwischen den Wechselrichtereinheiten und den Gleichspannungsquellen kann beispielsweise über entsprechende Versorgungsleitungen und/oder Stromschienen erfolgen.

Die Schaltungsanordnung, beispielsweise die nachfolgend noch genannten Steuermodule, kann bzw. können gegebenenfalls auch mechanisch mit den Gleichspannungsquellen verbindbar sein, beispielsweise mit einem Gehäuseteil einer Gleichspannungsquelle oder mehrerer Gleichspannungsquellen (z. B. einem Gehäuseteil einer Batterie) kraftschlüssig, formschlüssig und/oder stoffschlüssig verbunden sein.

An der ausgangsseitigen Schnittstelle des Wechselrichtermoduls kann ein Verbraucher oder können mehrere Verbraucher anschließbar oder angeschlossen sein. Besagter Verbraucher ist vorzugsweise nicht als Komponente der Schaltungsanordnung zu verstehen. Bei dem Verbraucher kann es sich um einen beliebigen elektrischen Verbraucher bis hin zu einer Gruppe aus mehreren elektrischen Verbrauchern handeln. Vorzugsweise handelt es sich bei dem Verbraucher um einen Elektromotor, um ein Antriebsaggregat und/oder um zumindest einen elektrischen Verbraucher innerhalb eines Niederspannungsnetzes (insbesondere eines Haushaltsstromnetzes).

Erfindungsgemäß weist die Schaltungsanordnung außerdem eine Ladungsausgleichseinheit zur Erfassung und zum Ausgleich von Ladungsdifferenzen zwischen den Gleichspannungsquellen auf, wobei die Ladungsausgleichseinheit mit der wenigstens einen Wechselrichtereinheit kommunikationsverbunden ist (z. B. mit einem Steuermodul der Wechselrichtereinheit), um die Verschaltung der Gleichspannungsquellen für den Ladungsausgleich zu beeinflussen.

Erfindungsgemäß weist die Schaltungsanordnung ferner eine Temperaturausgleichseinheit zur Erfassung und zum Ausgleich von Temperaturdifferenzen zwischen den Gleichspannungsquellen auf, wobei die Temperaturausgleichseinheit mit der wenigstens einen Wechselrichtereinheit kommunikationsverbunden ist (z. B. mit einem Steuermodul der Wechselrichtereinheit), um die Verschaltung der Gleichspannungsquellen für den Temperaturausgleich zu beeinflussen.

Auf vorteilhafte Weise kann eine Schaltungsanordnung eines Wechselrichters bereitgestellt werden, die ein Thermomanagement für Gleichspannungsquellen des Wechselrichters vorsieht, insbesondere für Batteriezellen einer Batterie.

Es kann vorgesehen sein, dass die Schaltungsanordnung die vorstehend genannte Steuereinrichtung aufweist oder mit der Steuereinrichtung kommunikationsverbunden ist. Die Ladungsausgleichseinheit und/oder die Temperaturausgleichseinheit können beispielsweise schaltungs- oder programmtechnische Komponenten der Steuereinrichtung sein.

Die Steuereinrichtung kann eingerichtet sein, Amplituden, Phasen und/oder Frequenzen ausgangsseitig für die Bereitstellung der Wechselspannung vorzugeben. Der Wechselrichter bzw. die Wechselrichtereinheiten können somit nach Vorgabe der Steuereinrichtung flexibel konfigurierbar sein, beispielsweise um das Betriebsverhalten des elektrischen Verbrauchers vorzugeben, zu steuern und/oder zu regeln.

Es kann vorgesehen sein, dass die Steuereinrichtung mit einem Steuermodul zumindest einer der Gleichspannungsquellen kommunikationsverbunden ist, um von dem Steuermodul Zustandsinformationen betreffend die Gleichspannungsquelle(n) zu empfangen, wobei die Steuereinrichtung weiter eingerichtet sein kann, die Zustandsinformationen bei der Konfiguration des Wechselrichters für die Erzeugung der Wechselspannung zu berücksichtigen. Bei besagtem Steuermodul kann es sich gleichzeitig um das Steuermodul der jeweiligen Wechselrichtereinheit handeln.

Das Steuermodul kann Komponenten eines Batteriemanagementsystems einer Batterie aufweisen oder ein Batteriemanagement umfassen. Ein Batteriemanagementsystem kann der Überwachung und/oder Regelung der Batterie dienen (teilweise auch als "Power-Management-System" (PMS) bezeichnet) und kann in analoger und/oder digitaler Weise Informationen über den aktuellen Zustand (beispielsweise Ladezustand und/oder Temperaturstatus) und/oder Bauart bzw. charakteristische Parameter (z. B. Nennspannung, Ladeschlussspannung und/oder Identifikationsdaten) der jeweiligen Batterie sowie deren Batteriezellen übertragen. Zur Erfassung der Ladungsdifferenzen und/oder Temperaturdifferenzen können daher vorzugsweise die in einer Batterie bereits vorhandenen Sensoren verwendbar sein.

In einer vorteilhaften Weiterbildung der Erfindung kann vorgesehen sein, dass eine Kaskade aus mehreren der Wechselrichtereinheiten gebildet wird. Vorzugsweise kann dabei jede der Wechselrichtereinheiten mit einer anderen der Gleichspannungsquellen verbindbar sein bzw. verbunden sein.

Auf einer Kaskade mehrerer Wechselrichtereinheiten basierende Wechselrichter werden auch "modulare Wechselrichter" genannt. Bei dieser Technik werden die einzelnen Gleichspannungsquellen nicht direkt, sondern über die einzelnen Wechselrichtereinheiten, beispielsweise die nachfolgend noch genannten leistungselektronischen H-Brücken, in Reihe geschaltet.

Da die einzelnen Gleichspannungsquellen jeweils über eine separate Wechselrichtereinheit zu- oder abgeschaltet werden können, ist ein Ladungsausgleich zwischen den Gleichspannungsquellen, also beispielsweise zwischen mehreren Batteriezellen, möglich. Bei einem Ausfall von Gleichspannungsquellen kann der Wechselrichter außerdem mit den noch funktionsbereiten Gleichspannungsquellen weiterbetrieben werden. Die Verfügbarkeit des Energieversorgungssystems kann hierdurch viel höher sein als bei der konventionellen Technik einer direkten Reihenschaltung der Gleichspannungsquellen. Defekte Gleichspannungsquellen, beispielsweise defekte Batteriezellen, können ausgeschaltet und überbrückt werden. Dadurch ist nicht zuletzt auch die Möglichkeit gegeben, diese Gleichspannungsquellen sogar während des Betriebs sicher auszuwechseln.

Auf vorteilhafte Weise können Gleichspannungsquellen unterschiedlichen Alters bzw. Zustands und unterschiedlichen Typs in demselben Energieversorgungssystem eingesetzt werden. Die Nutzungsdauer, beispielsweise eines Batterieblocks, kann dadurch erheblich verlängert werden.

In einer vorteilhaften Weiterbildung der Erfindung kann vorgesehen sein, dass die Wechselrichtereinheiten jeweils eine H-Brückenschaltung aus vier konfigurierbaren leistungselektronischen Schaltelementen aufweisen.

Derartige H-Brückenschaltungen sind grundsätzlich bekannt (vgl. auch "kaskadierte H-Brücke"). Beispielsweise sei diesbezüglich auf die DE 10 2018 003 642 A1 verwiesen, deren Offenbarungsgehalt durch diese Bezugnahme vollständig in die vorliegende Beschreibung aufgenommen sei. Die Erfindung eignet sich besonders vorteilhaft zur Verwendung mit Wechselrichtern, die auf kaskadierten H-Brücken basieren. Denn auf diese Weise kann nicht nur vorteilhaft eine Anpassung der Verschaltung der Gleichspannungsquellen im Hinblick auf den Ladungsausgleich, sondern auch im Hinblick auf den Temperaturausgleich stattfinden.

Beispielsweise können jeweils zwei der genannten leistungselektronischen Schaltelemente mit ihren Ausgängen zu einer Reihenschaltung verbunden sein und jeweils einen gemeinsamen Verbindungszweig der H-Brückenschaltung ausbilden. Es können zwei derartige Verbindungszweige vorgesehen sein. In beiden Verbindungszweigen kann zwischen den leistungselektronischen Schaltelementen jeweils ein Ausgang der Wechselrichtereinheit angeschlossen sein. Die jeweiligen Enden der Verbindungszweige können miteinander verbunden sein, wobei an jedem Ende ein Eingang der Wechselrichtereinheit angeschlossen ist; die beiden Verbindungszweige können somit parallelgeschaltet sein.

Es kann vorgesehen sein, dass die konfigurierbaren leistungselektronischen Schaltelemente als Bipolartransistoren oder vorzugsweise als MOSFETs ausgebildet sind. Es können grundsätzlich aber beliebige Schaltelemente, insbesondere Halbleiterbauelemente, zum Einsatz kommen. Die konfigurierbaren leistungselektronischen Schaltelemente können auch als Relais ausgebildet sein. Die Bauart der konfigurierbaren leistungselektronischen Schaltelemente ist grundsätzlich nicht einschränkend für die Erfindung.

Die leistungselektronischen Schaltelemente können beispielsweise von der vorstehend genannten Steuereinrichtung und/oder dem Steuermodul konfigurierbar sein. Es kann vorgesehen sein, dass die Steuereinrichtung eingerichtet ist, einzelne Gleichspannungsquellen in Abhängigkeit der von dem Steuermodul zu dieser Gleichspannungsquelle übermittelten Zustandsinformationen wahlweise in die Erzeugung der Wechselspannung einzubeziehen oder zumindest zeitweise auszuschließen.

Die Gleichspannungsquellen können insbesondere im Rahmen des Ladungsausgleichs oder Temperaturausgleichs zeitweise ausgeschlossen werden. Es kann aber auch vorgesehen sein, fehlerhafte oder überhitzte Gleichspannungsquellen längerfristig auszuschließen. Insbesondere können auch tiefentladene Batteriezellen längerfristig ausgeschlossen werden.

Die Erfindung betrifft auch ein Energieversorgungssystem, aufweisend eine Schaltungsanordnung gemäß den vorstehenden und nachfolgenden Ausführungen und die Gleichspannungsquellen, wobei die Gleichspannungsquellen mit der eingangsseitigen Schnittstelle der Schaltungsanordnung verbunden sind.

Eine besonders vorteilhafte Anwendung des vorgeschlagenen Energieversorgungssystems betrifft die elektrische Versorgung von elektrischen Verbrauchern eines Elektrofahrzeugs, insbesondere eines Elektroautos.

Gemäß einer Weiterbildung kann vorgesehen sein, dass das Energieversorgungssystem eine Energiespeicherbaugruppe mit den einzelnen Gleichspannungsquellen aufweist. Die Gleichspannungsquellen können allerdings auch jeweils voneinander unabhängig sein und müssen nicht zwingend in einer gemeinsamen Energiespeicherbaugruppe enthalten sein.

Beispielsweise kann die Energiespeicherbaugruppe eine Batterie aufweisen oder als Batterie ausgebildet sein, wobei die einzelnen Gleichspannungsquellen als Batteriezellen der Batterie ausgebildet sein können.

Die Erfindung betrifft auch eine elektrische Verbraucheranordnung, insbesondere ein Elektrofahrzeug, aufweisend ein Energieversorgungssystem gemäß den vorstehenden und nachfolgenden Ausführungen, und zumindest einen elektrischen Verbraucher.

Grundsätzlich kann es sich bei der elektrischen Verbraucheranordnung um eine beliebige Verbraucheranordnung handeln, die zumindest einen elektrischen Verbraucher aufweist. Beispielsweise kann es sich bei der Verbraucheranordnung um eine Elektrowerkzeugmaschine bis hin zu einem mit elektrischer Energie zu versorgenden Gebäude handeln.

Es kann vorgesehen sein, dass der elektrische Verbraucher einen Elektromotor aufweist, insbesondere einen Wechselstrommotor oder einen Drehstrommotor.

Besonders bevorzugt handelt es sich bei der elektrischen Verbraucheranordnung um ein Elektrofahrzeug. Der Begriff "Elektrofahrzeug" beschreibt jegliches elektrisch betriebene Fortbewegungsmittel, insbesondere Fahrzeuge zu Lande, zu Wasser oder in der Luft, eingeschlossen auch Raumfahrzeuge. Vorzugsweise handelt es sich bei dem Elektrofahrzeug bzw. bei der Verbraucheranordnung allerdings um ein Elektroauto.

Die Erfindung eignet sich insbesondere aber auch zur elektrischen Versorgung von Haushalten oder Industrieanlagen.

Merkmale, die im Zusammenhang mit einem der Gegenstände der Erfindung, namentlich gegeben durch die Schaltungsanordnung, das Energieversorgungssystem, die Verbraucheranordnung, das Verfahren und das Computerprogramm, beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

An dieser Stelle sei darauf hingewiesen, dass der in der vorliegenden Beschreibung und in den Ansprüchen verwendete Begriff "verbunden" bzw. "Verbindung" eine unmittelbare elektrische Verbindung der genannten Komponenten, aber auch eine mittelbare elektrische Verbindung der genannten Komponenten (also z. B. über weitere elektrische Leitungen oder elektronische Bauteile wie Widerstände, Induktivitäten und/oder Kapazitäten etc.) beschreiben kann. Der Begriffe "angeschlossen" deutet hingegen in der Regel eine unmittelbare Verbindung der genannten Komponenten an.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft auch ein von Patentanspruch 1 unabhängiges Verfahren zur Erzeugung einer Wechselspannung durch Verschaltung einer Mehrzahl von Gleichspannungsquellen, aufweisend zumindest die folgenden Verfahrensschritte:
- Erfassen von Temperaturdifferenzen zwischen den Gleichspannungsquellen; und
- Berücksichtigen der erfassten Temperaturdifferenzen im Rahmen der Verschaltung der Gleichspannungsquellen zur Durchführung eines Temperaturausgleichs.
Insbesondere der Ladungsausgleich ist vorzugsweise nicht Teil des unabhängigen Verfahrens. Die Anmelderin behält sich daher explizit vor, das Verfahren auch ohne den Ladungsausgleich zu beanspruchen. Dies gilt analog auch für das Computerprogramm, die Schaltungsanordnung, das Energieversorgungssystem und die Verbraucheranordnung. Die weiteren Merkmale des Anspruchs 1 und der abhängigen Ansprüche sowie die in der vorliegenden Beschreibung beschriebenen Merkmale betreffen vorteilhafte Ausführungsformen und Varianten dieser unabhängigen Erfindungen.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine Verbraucheranordnung aus einem elektrischen Verbraucher und einem Energieversorgungssystem, gemäß einem Ausführungsbeispiel der Erfindung;
- Figur 2: ein beispielhafter modularer Wechselrichter einer erfindungsgemäßen Schaltungsanordnung mit mehreren einzeln konfigurierbaren Wechselrichtereinheiten;
- Figur 3: eine H-Brückenschaltung einer beispielhafte Wechselrichtereinheit eines modularen Wechselrichters einer erfindungsgemäßen Schaltungsanordnung;
- Figur 4: ein Batteriemodul mit fünf in einer Reihenschaltung verbundenen Batteriezellen; und
- Figur 5: ein Ablaufdiagramm eines Verfahrens zur Erzeugung einer Wechselspannung gemäß einem Ausführungsbeispiel der Erfindung.

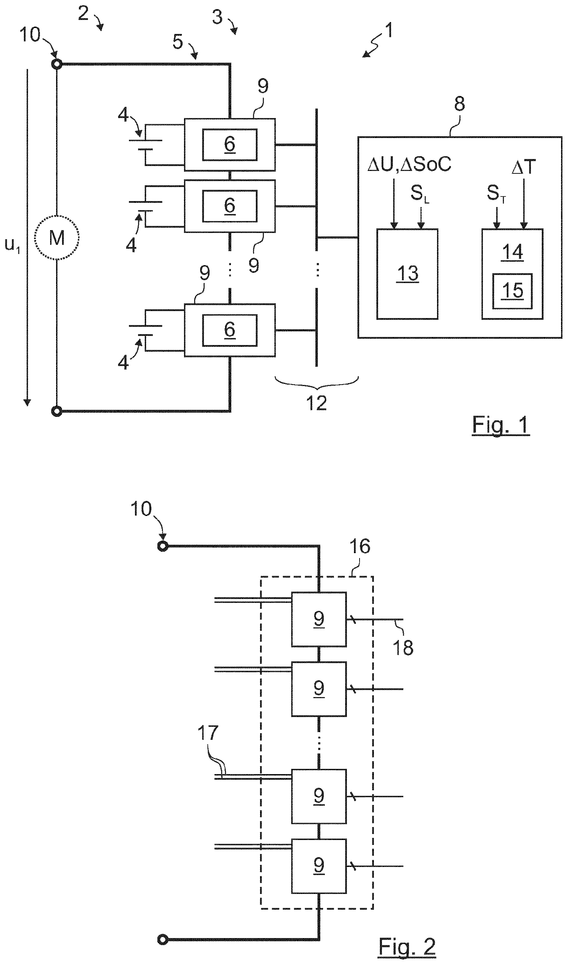

Figur 1 zeigt eine elektrische Verbraucheranordnung 1, bei der es sich beispielsweise um ein Elektrofahrzeug (insbesondere um ein Elektroauto) handeln kann. Die Verbraucheranordnung 1 weist ein Energieversorgungssystem 2 auf, um einen elektrischen Verbraucher M elektrisch zu versorgen. Bei dem elektrischen Verbraucher M handelt es sich im Ausführungsbeispiel um einen Elektromotor, genauer gesagt um einen Wechsel- oder Drehstrommotor.

Das Energieversorgungssystem 2 weist eine Schaltungsanordnung 3 sowie mehrere Gleichspannungsquellen 4 auf. Die Gleichspannungsquellen 4 sind im Ausführungsbeispiel Teil einer gemeinsamen Energiespeicherbaugruppe 5. Bei der Energiespeicherbaugruppe 5 handelt es sich vorzugsweise um eine Batterie bzw. um ein Akkupack, wobei die einzelnen Gleichspannungsquellen 4 als Batteriezellen bzw. Akkuzellen der Batterie bzw. des Akkupacks ausgebildet sind. Insbesondere kann es sich bei den Gleichspannungsquellen 4 um Batteriezellen eines Hochvoltspeichers eines Elektrofahrzeugs handeln. Die Energiespeicherbaugruppe 5 wird nachfolgend mitunter als Batterie und die Gleichspannungsquellen 4 als Batteriezellen bezeichnet. Dabei handelt es aber sich lediglich um eine bevorzugte Anwendung, die nicht einschränkend zu verstehen ist.

Die Energiespeicherbaugruppe 5 bzw. die Batterie kann eines oder vorzugsweise mehrere Steuermodule 6 aufweisen, um Zustandsinformationen betreffend die Batteriezellen 4 zu ermitteln. Bei den genannten Zustandsinformationen kann es sich insbesondere um Informationen zur aktuellen Batteriezellspannung U_{1...n}, zur aktuellen Temperatur T_{1...n}, zum aktuellen Ladezustand SoC_{1...n} oder zum aktuellen "Gesundheitszustand" der jeweiligen Batteriezelle 4 handeln.

Die erfindungsgemäß vorgeschlagene Schaltungsanordnung 3, der unter anderem die einzelnen Steuermodule 6 der Energiespeicherbaugruppe 5 zuzurechnen sind, dient primär der elektrischen Versorgung des mit der Schaltungsanordnung 3 verbindbaren elektrischen Verbrauchers M mittels einer Wechselspannung u₁. Die Schaltungsanordnung 3 weist außerdem eine Steuereinrichtung 8 (zentrale Steuerung) und mehrere Wechselrichtereinheiten 9 auf. Im Ausführungsbeispiel sind die Steuermodule 6 in jeweilige Wechselrichtereinheiten 6 integriert - dies ist aber nur als beispielhafte Möglichkeit zu verstehen.

Zur Versorgung des elektrischen Verbrauchers M weist die Schaltungsanordnung 3 und/oder die Energiespeicherbaugruppe 5 eine ausgangsseitige Schnittstelle 10 auf, an der die erzeugte Wechselspannung u₁ anliegt.

Die Wechselrichtereinheiten 9 sind konfigurierbar und die Steuereinrichtung 8 eingerichtet, die Wechselrichtermodule 9 zu konfigurieren, insbesondere über deren Steuermodule 6, um für den Betrieb des elektrischen Verbrauchers M dessen Wechselspannung u₁ hinsichtlich Amplitude, Phase und/oder Frequenz optimal einzustellen.

Die Steuereinrichtung 8 kann mit den Steuermodulen 6 der Energiespeicherbaugruppe 5 bzw. der Batterie kommunikationsverbunden sein (in Figur 1 ist beispielhaft ein Kommunikationsbus 12 angedeutet), um von den Steuermodulen 6 die bereits genannten Zustandsinformationen betreffend die einzelnen Batteriezellen 4 zu empfangen und dieselben für die Erzeugung der Wechselspannung u₁ auf geeignete Weise zu konfigurieren, unter Berücksichtigung der Zustandsinformationen.

Die Steuereinrichtung 8, die Steuermodule 6 und die Wechselrichtereinheiten 9 können insbesondere eingerichtet sein, eine der Gleichspannungsquellen 4 bzw. Batteriezellen in Abhängigkeit der von dem Steuermodul 6 zu dieser Gleichspannungsquelle 4 erfassten Zustandsinformation wahlweise in die Erzeugung der Wechselspannung u₁ einzubeziehen oder zumindest zeitweise auszuschließen. Auf diese Weise kann insbesondere ein Ladungsausgleich und ein Temperaturausgleich zwischen den Batteriezellen 4 durchgeführt werden.

Es kann ein Computerprogramm vorgesehen sein, umfassend Steuerbefehle, die bei der Ausführung des Programms durch die Steuereinrichtung 8 diese veranlassen, ein entsprechendes Verfahren zur Erzeugung der Wechselspannung u₁ durch geeignete Verschaltung der Gleichspannungsquellen 4 bzw. Batteriezellen durchzuführen.

Die Steuereinrichtung 8 weist eine Ladungsausgleichseinheit 13 zur Erfassung und zum Ausgleich von Ladungsdifferenzen zwischen den Gleichspannungsquellen 4 auf. Im Ausführungsbeispiel der Figur 1 ist die Ladungsausgleichseinheit 13 als Black Box innerhalb der Steuereinrichtung 8 dargestellt (z. B. implementiert als Schaltungsbaugruppe oder Softwaremodul), was aber lediglich beispielhaft zu verstehen ist; die Ladungsausgleichseinheit 13 kann auch unabhängig von der Steuereinrichtung 8 ausgebildet sein.

Der Ladungsausgleichseinheit 13 werden für den Ladungsausgleich entsprechende, für die Ladungsdifferenz charakteristische Spannungsdifferenzen ΔU oder der Ladezustandsdifferenzen ΔSoC der einzelnen Batteriezellen 4 zugeführt, sowie vorzugsweise ein Spannungs- oder Ladungsdifferenzschwellenwert S_{L} bei dessen Überschreitung für eine jeweilige Batteriezelle 4 ein Ladungsausgleich erfolgen soll. Im Rahmen des Ladungsausgleichs kann die Ladungsentnahme aus einer ladungsverminderten Gleichspannungsquelle reduziert und von zumindest einer weiteren der Gleichspannungsquellen zumindest teilweise ausgeglichen werden, wenn die Gleichspannung der ladungsverminderten Gleichspannungsquelle beispielsweise eine Spannungsdifferenz ΔU von mehr als 5 mV zu der durchschnittlichen Gleichspannung aller Gleichspannungsquellen 4 aufweist, insbesondere wenn die Spannungsdifferenz ΔU mehr als 10 mV, mehr als 20 mV, mehr als 50 mV, mehr als 100 mV oder mehr als 500 mV beträgt und/oder wenn der Ladezustand SoC der ladungsverminderten Gleichspannungsquelle beispielsweise eine Ladezustandsdifferenz ΔSoC von mehr als 1% zu dem durchschnittlichen Ladezustand aller Gleichspannungsquellen 4 aufweist, insbesondere wenn die Ladezustandsdifferenz ΔSoC mehr als 2% oder mehr als 3% beträgt.

Die Schaltungsanordnung 3 weist außerdem eine Temperaturausgleichseinheit 14 zur Erfassung und zum Ausgleich von Temperaturdifferenzen ΔT zwischen den Gleichspannungsquellen 4 auf. In dem Ausführungsbeispiel der Figur 1 ist auch die Temperaturausgleichseinheit 14 als Black Box innerhalb der Steuereinrichtung 8 dargestellt (z. B. implementiert als Schaltungsbaugruppe oder Softwaremodul), was aber wiederum nicht einschränkend zu verstehen ist. Die Temperaturausgleichseinheit 14 kann daher auch unabhängig von der Steuereinrichtung 8 ausgebildet sein.

Der Temperaturausgleichseinheit 14 werden für den Temperaturausgleich entsprechende Temperaturdifferenzen ΔT der einzelnen Batteriezellen 4 zugeführt, sowie vorzugsweise ein Temperaturschwellenwert S_{T} bei dessen Überschreitung für eine jeweilige Batteriezelle 4 ein Temperaturausgleich erfolgen soll. Im Rahmen des Temperaturausgleichs kann die Ladungsentnahme aus einer überwärmten Gleichspannungsquelle reduziert und von zumindest einer weiteren der Gleichspannungsquellen zumindest teilweise ausgeglichen werden, wenn die Temperaturdifferenz ΔT zwischen der Temperatur der überwärmten Gleichspannungsquelle und der durchschnittlichen Temperatur aller Gleichspannungsquellen 4 den Temperaturschwellenwert S_{T} überschreitet. Als Temperaturschwellenwert S_{T} kann beispielsweise eine Temperaturdifferenz ΔT von 1 °C, 2 °C, 5 °C, 10 °C, 15 °C oder 20 °C verwendet werden.

Im Rahmen des Temperaturausgleichs können insbesondere aktuell erfasste Temperaturdifferenzen berücksichtigt werden. Alternativ oder ergänzend können auch zukünftig zu erwartende Temperaturdifferenzen ΔT anhand eines thermischen Modells 15 prädiziert werden. Dies kann vorteilhaft sein, da die thermische Zeitkonstante einer Batteriezelle 4 in der Regel vergleichsweise groß ist.

Die Wechselrichtereinheiten 9 können grundsätzlich beliebig ausgebildet sein. Vorzugsweise bilden die Wechselrichtereinheiten 9 allerdings gemeinsam einen modulareren Wechselrichter 16, wie in Figur 2 beispielhaft dargestellt.

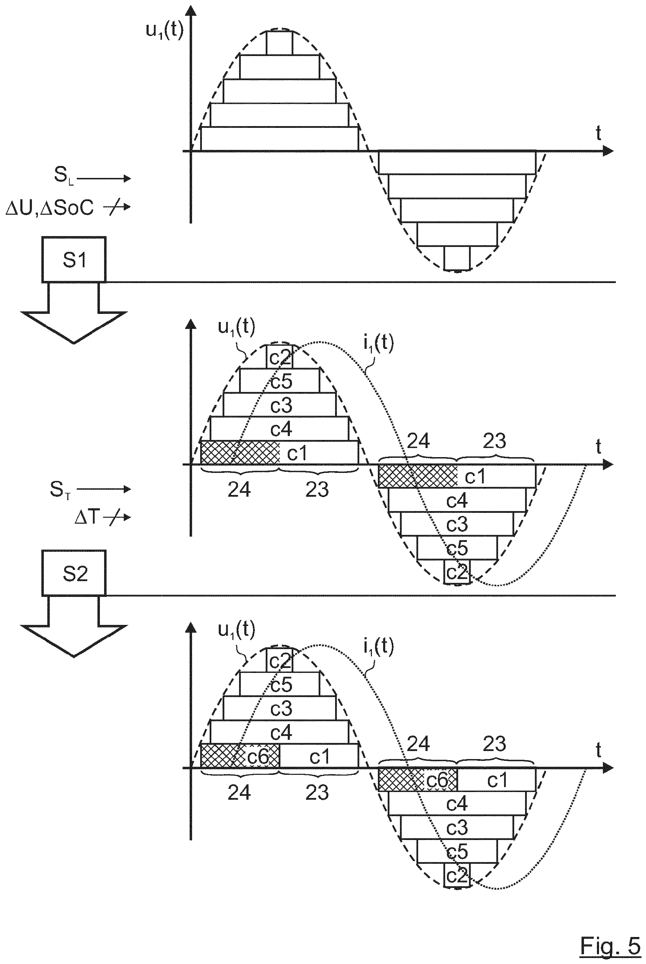

Der modulare Wechselrichter 16 kann daher als Kaskade der einzelnen Wechselrichtereinheiten 9 ausgebildet sein, wobei jede der Wechselrichtereinheiten 9 mit einer anderen der Gleichspannungsquellen 4 verbindbar ist. Die entsprechenden Versorgungsleitungen 17, die mit den Batteriezellen bzw. Gleichspannungsquellen 4 verbindbar sind, sind in Figur 2 ebenfalls angedeutet. Ferner sind Kommunikationsleitungen 18 angedeutet, die mit der Steuereinrichtung 8 der Schaltungsanordnung 3 verbunden sein können (insbesondere über den Kommunikationsbus 12). Auf diese Weise kann durch entsprechende Konfiguration der Kaskade eine aus den einzelnen Gleichspannungsquellen 4 stufig bzw. treppenförmig ausgebildete Wechselspannung u₁ erzeugbar sein, wie in Figur 5 angedeutet.

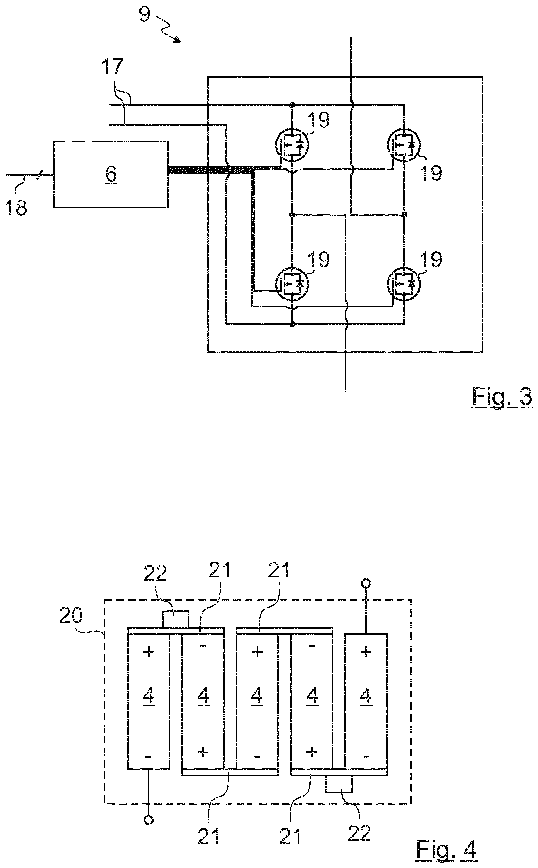

Ein möglicher Aufbau einer einzelnen Wechselrichtereinheit 9 ist in Figur 3 beispielhaft gezeigt. Die Wechselrichtereinheiten 9 können insbesondere jeweils eine H-Brückenschaltung aus vier von der Steuereinrichtung 8 und/oder den Steuermodulen 6 konfigurierbaren leistungselektronischen Schaltelementen 19 aufweisen. Die leistungselektronischen Schaltelemente 19 können beispielsweise als Halbleiterbauelemente ausgebildet sein, insbesondere als in Figur 3 angedeutete MOSFETs. Die Steuermodule 6 können zur Ansteuerung der Schaltelemente 19 ausgebildet sein, gegebenenfalls gemäß den Vorgaben der Steuereinrichtung 8, die dem jeweiligen Steuermodul 6 über die Kommunikationsleitung 18 bzw. den Kommunikationsbus 12 übermittelt werden.

Figur 4 zeigt ein beispielhaftes Batteriemodul 20 der Energiespeicherbaugruppe 5. Einerseits soll verdeutlicht werden, dass anstelle einzelner Batteriezellen 4 auch eine Gruppe von Batteriezellen 4 als "Gleichspannungsquelle" im Sinne der vorliegenden Erfindung verwendbar sein kann. Diesbezüglich sind beispielhaft fünf Batteriezellen 4 in einer fest verdrahteten Reihenschaltung mittels Stromschienen 21 miteinander verbunden, um eine gemeinsame Ausgangsspannung bereitzustellen. Innerhalb der Energiespeicherbaugruppe 5 können vorzugsweise mehrere derartige Batteriemodule 20 vorgesehen sein.

Zur Erfassung der Temperaturdifferenz ΔT zwischen den Gleichspannungsquellen 4 kann einer oder können mehrere Temperatursensoren 22 vorgesehen sein. In Figur 4 sind beispielhaft zwei Temperatursensoren 22 an den äußeren Batteriezellen 4 angeordnet, mit denen jeweils die Temperaturen der zwei mit der korrespondierenden Stromschiene 21 verbundenen Batteriezellen 4 gemeinsam erfasst werden. Die Temperatur der mittleren Batteriezelle 4 kann anschließend vorzugsweise approximiert werden. Grundsätzlich können aber beliebig viele Temperatursensoren 22 innerhalb eines Batteriemoduls 20 oder der Batterie bzw. der Energiespeicherbaugruppe 5 insgesamt vorgesehen sein. Bei den Temperatursensoren kann es sich beispielsweise um NTC- oder PTC-Sensoren handeln.

Anhand von Figur 5 soll beispielhaft ein vorteilhafter Verfahrensablauf im Rahmen der Erfindung verdeutlicht werden. Im Rahmen des erfindungsgemäßen Verfahrens kann insbesondere vorgesehen sein, die Wechselspannung u₁ durch treppenförmige Annäherung der Einzelzellspannungen mehrerer Batteriezellen bereitzustellen. In Figur 5 ist das Prinzip anhand von sechs beispielhaften Batteriezellen c1-c6 angedeutet.

Gemäß einem ersten Verfahrensschritt S1 kann bei der Verschaltung der Batteriezellen c1 bis c5 ein Ladungsausgleich zwischen den einzelnen Batteriezellen c1 bis c5 vorgesehen sein. Zur Erfassung der Ladungsdifferenzen können Spannungsdifferenzen ΔU oder direkt Ladezustandsdifferenzen ΔSoC (beispielsweise mit einem Modell der Batteriezellen 4 aus den jeweiligen Batteriezellspannungen berechnet), und optional ein Ladungsdifferenzschwellenwert S_{L} herangezogen werden. Auf Grundlage der Restladung bzw. verfügbaren Kapazitäten der einzelnen Batteriezellen c1 bis c5 können die Anforderungen für die treppenförmigen Annäherung der Wechselspannung u₁ auf geeignete Weise verteilt werden, so dass aus Batteriezellen mit höherer Restladung mehr Ladung entnommen wird als aus bereits ladungsverminderten Batteriezellen. In Figur 5 ist eine beispielhafte Verteilung in der mittleren Grafik angedeutet, bei der aus der untersten Batteriezelle c1 die meiste Ladung entnommen und aus der obersten Batteriezelle c2 (oberste Position der "Treppe") die wenigste Ladung entnommen wird. Diese Verteilung kann vorzugsweise während des Betriebs regelmäßig angepasst werden. Insbesondere kann vorgesehen sein, die Batteriezellen c1 bis c5 beim Aufbau der Wechselspannung u₁ jeweils derart durchzuwechseln, dass Ladungsdifferenzen zwischen allen Batteriezellen c1 bis c5 minimiert bleiben.

Für einen Ladevorgang kann sich der Aufbau der Wechselspannung u₁ in der umgekehrten Reihenfolge wie beim Entladevorgang ergeben. Das heißt, die Batteriezellen 4 mit der höchsten Ladung werden dem oberen Teil der Sinuskurve und die mit der niedrigsten Ladung dem unteren Teil der Sinuskurve zugeordnet.

Im Rahmen eines zweiten Verfahrensschrittes S2 kann vorgesehen sein, dass zusätzlich zu dem Ladungsausgleich noch ein Temperaturausgleich zwischen den Batteriezellen c1 bis c5 erfolgt.

Hierzu werden erfasste Temperaturdifferenzen ΔT zwischen den Batteriezellen c1 bis c5 und vorzugsweise ein Temperaturschwellenwert S_{T} herangezogen. Es kann vorgesehen sein, bereits überwärmte Gleichspannungsquellen bzw. Batteriezellen möglichst zu schonen. Da dies zu einem Widerspruch mit der parallelen Ladungsausgleichsaufgabe führen kann, kann es von Vorteil sein, im Rahmen des Ladungsausgleichs einzig Wirkleistungsanteile 23 (z. B. für Batteriezelle c1) der Batteriezellen c1 bis c5 untereinander auszugleichen und im Rahmen des Temperaturausgleichs einzig Blindleistungsanteile 24 (z. B. für Batteriezelle c1) auszugleichen. Das Prinzip soll anhand der mittleren und unteren Grafik in Figur 5 verdeutlicht werden.

Bei vorhandener Blindleistung sind Stromkurve i(t) und Spannungskurve u(t) bekanntermaßen phasenverschoben, wie in Figur 5 angedeutet. Daher ergibt sich bei der Erzeugung der Wechselspannung u₁ ein zyklisch pendelnder Ladungsanteil, also ein Blindleistungsanteil, der die tatsächliche Ladungsentnahme aus den Batteriezellen c1 bis c5 im Wesentlichen nicht beeinflusst. Der Blindleistungsanteil 24 ist beispielhaft in der untersten Batteriezelle c1 in der mittleren Grafik von Figur 5 kreuzschraffiert angedeutet. Da dieser Blindleistungsanteil 24 die Ladungsentnahme aus der Batteriezelle c1 im Grunde nicht beeinflusst, kann sich der Ladungsausgleich vorzugsweise auf den Wirkleistungsanteil 23 beschränken. Hingegen führt auch der Blindleistungsanteil 24 aufgrund von Stromwärmeverlusten zu einer Temperaturerhöhung und damit zu einer thermischen Belastung der Batteriezelle c1. Um die thermische Belastung der untersten Batteriezelle c1 zu verringern kann daher vorgesehen sein, deren Blindleistungsanteil 24 von einer weiteren oder von mehreren Batteriezellen - im Ausführungsbeispiel eine sechste Batteriezelle c6 - ausgleichen zu lassen, wie in der untersten Grafik von Figur 5 angedeutet. Dabei ändert sich die Ladungsentnahme aus der ersten Batteriezelle c1 und der sechsten Batteriezelle c6 im Grunde nahezu nicht, weshalb der Temperaturausgleich auf den Ladungsausgleich keinen oder nur einen zu vernachlässigenden Einfluss hat.

Zum Temperatur- und Ladungsausgleich kann vorgesehen sein, dass innerhalb der Energiespeicherbaugruppe 5 bzw. der Batterie eine Reserve an Gleichspannungsquellen 4 bzw. Batteriezellen vorhanden ist (beispielsweise die sechste Batteriezelle c6). Alternativ oder ergänzend kann aber auch vorgesehen sein, dass der Ausgleich durch eine der anderen, im jeweiligen Zyklus bereits verwendeten Batteriezellen 4 erfolgt. So können beispielsweise die Batteriezellen c2 bis c5 auch zum (teilweisen) Ausgleich beispielsweise des Blindleistungsanteils 24 der ersten Batteriezelle c1 herangezogen werden.

Grundsätzlich sei erwähnt, dass auch noch weitere Verfahrensschritte vorgesehen sein können. Insbesondere können Verfahrensschritte im Rahmen der Erfindung auch entfallen. Ferner kann die Reihenfolge der Verfahrensschritte variieren.

## Patentansprüche

1. Verfahren zur Erzeugung einer Wechselspannung (u₁) durch Verschaltung einer Mehrzahl von Gleichspannungsquellen (4), aufweisend zumindest die folgenden Verfahrensschritte:
- Erfassen von Ladungsdifferenzen der Gleichspannungsquellen (4); und
- Berücksichtigen der erfassten Ladungsdifferenzen im Rahmen der Verschaltung der Gleichspannungsquellen (4) zur Durchführung eines Ladungsausgleichs,
**gekennzeichnet durch**
zumindest die folgenden weiteren Verfahrensschritte:
- Erfassen von Temperaturdifferenzen (ΔT) zwischen den Gleichspannungsquellen (4); und
- Berücksichtigen der erfassten Temperaturdifferenzen (ΔT) im Rahmen der Verschaltung der Gleichspannungsquellen (4) zur Durchführung eines Temperaturausgleichs.

2. Verfahren nach Anspruch 1,
**dadurch gekennzeichnet, dass**
die Gleichspannungsquellen (4) in einer konfigurierbaren Reihenschaltung miteinander verschaltet werden, um die Wechselspannung (u₁) durch eine treppenförmige Annäherung zu erzeugen.

3. Verfahren nach Anspruch 1 oder 2,
**dadurch gekennzeichnet, dass**
im Rahmen des Ladungsausgleichs die Ladungsentnahme aus einer ladungsverminderten Gleichspannungsquelle reduziert und von zumindest einer weiteren der Gleichspannungsquellen zumindest teilweise ausgeglichen wird, wenn
a) die Gleichspannung (U_{1...n}) der ladungsverminderten Gleichspannungsquelle eine Spannungsdifferenz (ΔU) von mehr als 5 mV zu der durchschnittlichen Gleichspannung aller Gleichspannungsquellen (4) aufweist, insbesondere wenn die Spannungsdifferenz (ΔU) mehr als 10 mV, mehr als 20 mV, mehr als 50 mV, mehr als 100 mV oder mehr als 500 mV beträgt; oder
b) der Ladezustand (SoC) der ladungsverminderten Gleichspannungsquelle eine Ladezustandsdifferenz (ΔSoC) von mehr als 1% zu dem durchschnittlichen Ladezustand aller Gleichspannungsquellen (4) aufweist, insbesondere wenn die Ladezustandsdifferenz (ΔSoC) mehr als 2% oder mehr als 3% beträgt.

4. Verfahren nach einem der Ansprüche 1 bis 3,
**dadurch gekennzeichnet, dass**
im Rahmen des Ladungsausgleichs einzig Wirkleistungsanteile (23) der Gleichspannungsquellen (4) untereinander berücksichtigt und ausgeglichen werden.

5. Verfahren nach einem der Ansprüche 1 bis 4,
**dadurch gekennzeichnet, dass**
zur Erfassung der Temperaturdifferenzen (ΔT) zwischen den Gleichspannungsquellen (4) eine Kombination sensortechnisch erfasster Temperaturwerte (T_{1...n}) und approximierter Temperaturwerte herangezogen werden.

6. Verfahren nach einem der Ansprüche 1 bis 6,
**dadurch gekennzeichnet, dass**
im Rahmen des Temperaturausgleichs aktuell erfasste Temperaturdifferenzen (ΔT) und anhand eines thermischen Modells (15) prädizierte, zukünftig zu erwartende Temperaturdifferenzen berücksichtigt werden.

7. Verfahren nach einem der Ansprüche 1 bis 6,
**dadurch gekennzeichnet, dass**
im Rahmen des Temperaturausgleichs die Ladungsentnahme aus einer überwärmten Gleichspannungsquelle reduziert und von zumindest einer weiteren der Gleichspannungsquellen zumindest teilweise ausgeglichen wird, wenn die Temperaturdifferenz (ΔT) zwischen der Temperatur (T_{1...n}) der überwärmten Gleichspannungsquelle und der durchschnittlichen Temperatur aller Gleichspannungsquellen (4) einen definierten Temperaturschwellenwert (S_{T}) überschreitet.

8. Verfahren nach Anspruch 7,
**dadurch gekennzeichnet, dass**
als Temperaturschwellenwert (S_{T}) 1 °C, 2 °C, 5 °C, 10 °C, 15 °C oder 20 °C verwendet wird.

9. Verfahren nach einem der Ansprüche 1 bis 8,
**dadurch gekennzeichnet, dass**
im Rahmen des Temperaturausgleichs einzig Blindleistungsanteile (24) der Gleichspannungsquellen (4) untereinander berücksichtigt und ausgeglichen werden.

10. Computerprogramm, umfassend Steuerbefehle, die bei der Ausführung des Programms durch eine Steuereinrichtung (8) diese veranlassen, das Verfahren gemäß einem der Ansprüche 1 bis 9 auszuführen.

11. Schaltungsanordnung (3) zur Erzeugung einer Wechselspannung (u₁) aus einer Mehrzahl von Gleichspannungsquellen (4), aufweisend
- eine ausgangsseitige Schnittstelle (10) zur Bereitstellung der erzeugten Wechselspannung (u₁);
- wenigstens eine Wechselrichtereinheit (9) zur Erzeugung und Bereitstellung der Wechselspannung (u₁) an der ausgangsseitigen Schnittstelle (10) aus jeweiligen Gleichspannungen (U_{1...n}) von mit der wenigstens einen Wechselrichtereinheit (9) verbindbaren Gleichspannungsquellen (4); und
- eine Ladungsausgleichseinheit (13) zur Erfassung und zum Ausgleich von Ladungsdifferenzen zwischen den Gleichspannungsquellen (4), wobei die Ladungsausgleichseinheit (13) mit der wenigstens einen Wechselrichtereinheit (9) kommunikationsverbunden ist, um die Verschaltung der Gleichspannungsquellen (4) für den Ladungsausgleich zu beeinflussen,
**gekennzeichnet durch**
eine Temperaturausgleichseinheit (14) zur Erfassung und zum Ausgleich von Temperaturdifferenzen (ΔT) zwischen den Gleichspannungsquellen (4), wobei die Temperaturausgleichseinheit (14) mit der wenigstens einen Wechselrichtereinheit (9) kommunikationsverbunden ist, um die Verschaltung der Gleichspannungsquellen (4) für den Temperaturausgleich zu beeinflussen.

12. Schaltungsanordnung (3) nach Anspruch 11,
**dadurch gekennzeichnet, dass**
eine Kaskade aus mehreren der Wechselrichtereinheiten (9) gebildet wird, wobei jede der Wechselrichtereinheiten (9) mit einer anderen der Gleichspannungsquellen (4) verbindbar ist.

13. Schaltungsanordnung (3) nach Anspruch 12,
**dadurch gekennzeichnet, dass**
die Wechselrichtereinheiten (9) jeweils eine H-Brückenschaltung aus vier konfigurierbaren leistungselektronischen Schaltelementen (19) aufweisen.

14. Energieversorgungssystem (2), aufweisend eine Schaltungsanordnung (3) gemäß einem der Ansprüche 11 bis 13 und die Gleichspannungsquellen (4), wobei die Gleichspannungsquellen (4) mit der eingangsseitigen Schnittstelle (11) der Schaltungsanordnung (3) verbunden sind.

15. Energieversorgungssystem (2) nach Anspruch 14,
**gekennzeichnet durch**
eine Energiespeicherbaugruppe (5), die eine Batterie aufweist, wobei die Gleichspannungsquellen (4) als Batteriezellen der Batterie ausgebildet sind.
